# EUROPÄISCHE PATENTSCHRIFT

(11) **EP 1 156 306 B1**
(45) Veröffentlichungstag und Bekanntmachung des Hinweises auf die Patenterteilung: **08.09.2010**
(21) Anmeldenummer: 01111625.8
(22) Anmeldetag: 12.05.2001
(51) Int. Cl.: G01F 23/296

(54) **Verfahren zur Ansteuerung von piezoelektrischen Antrieben in Füllstandsmessgeräten**
Method for controlling piezoelectric drives in liquid level measurement devices
Procédé d'actionnement d'une commande piezoélectrique dans des dispositifs de mesure du niveau des fluides

(30) Priorität: 15.05.2000 DE 10023306
(43) Veröffentlichungstag der Anmeldung: 21.11.2001
(73) Patentinhaber: VEGA Grieshaber KG, 77709 Wolfach (DE)
(72) Erfinder: Raffalt, Felix, 77756 Hausach (DE); Frick, Adrian, 77709 Wolfach (DE)
(74) Vertreter: Patentanwälte Westphal, Mussgnug & Partner

(56) Entgegenhaltungen:
- DE-C- 19 508 700
- US-A- 2 753 542

## Beschreibung

Die Erfindung betrifft ein Verfahren zur Ansteuerung von piezoelektrischen Antrieben in Füllstandmessgeräten gemäss den Merkmalen des Oberbegriffs des Anspruch 1.

Ein solches Verfahren ist z. B. aus EP 0 810 423 A2 bekannt.

Ein solches Verfahren ist beispielsweise auch aus der deutschen Patentanmeldung DE 19 621 449 Al der Anmelderin bekannt. Dort ist auch der prinzipielle Aufbau eines Gabelresonators beschrieben, worauf ausdrücklich zum Zwecke der Offenbarung Bezug genommen wird.

Bei der Verkleinerung von Schwinggabelsystemen bis zu sehr kurzen Gabelzinkenlängen ergibt sich das grundlegende Problem, dass neben der Zinkenlänge auch die übrigen Komponenten in entsprechendem Masse zu verkleinern sind, um abgesehen von der deutlich höheren Frequenz gleichwertige schwingungstechnische Eigenschaften zu erhalten. Während eine entsprechende Reduzierung der Baulänge der piezoelektrischen Antriebseinheit grundsätzlich möglich ist, existieren andere Komponenten und Parameter, die sich nicht im passenden Verhältnis mitändern.

So beträgt z.B. bei Standardschwinggabeln von etwa 100 mm Zinkenlänge die Membrandicke 1 mm. Bei einer auf 40 mm verkürzten Schwinggabel waren jedoch 0,4 mm Membrandicke anzustreben. Da für eine Anerkennung der Mambran als Ex-Zonentrennung jedoch 1 mm Mindestmaterialstärke gesetzlich vorgeschrieben ist, ergibt sich ein grobes Missverhältnis zwischen Zinkenlänge und Membrandicke.

Dieses Problem wird weiter noch dadurch verstärkt, dass der zentrale Zugbolzen auf der Membran in seinem Durchmesser ebenfalls nicht verkleinert werden kann, da er ansonsten keine ausreichende Zugfestigkeit für die vom Antriebssystem aufgebrachte mechanische Zugspannung aufweisen würde.

Eine schwächere Auslegung des Antriebssystems ist jedoch nicht möglich, da aufgrund der gleichgebliebenen Membrandicke bei gleichzeitig reduziertem Durchmesser die Membransteifigkeit zugenommen hat. Da der Zugbolzen bei reduziertem Membrandurchmesser relativ gesehen mehr Fläche beansprucht, führt er zu einer weiteren Erhöhung der Membranbiegesteifigkeit.

Die im Vergleich zu den Gabelzinken deutlich zu hohe Membranbiegesteifigkeit hat die unerwünschte Folge, dass die Gabelzinken selber einen merklichen Teil der Gesamtbiegeschwingung des Vibrationsresonators übernehmen. Besonders störend wirkt dabei die Tatsache, dass insbesondere bei füllgutbedeckter Schwinggabel neben der Grundmodeschwingung auch die Ausbildung von Schwingungsknoten auf den Gabelzinken stattfindet mit der unerwünschten Folge von Oberwellenresonanzen.

Gemäß Stand der Technik wird im Rückkoppeloszillator, welcher der Erregung des Vibrationsresonators dient, ein Grundwellenbandfilter angebracht, so dass ein Einrasten des Schwingkreises auf einer Oberwelle zuverlässig verhindert wird. Die teilweise Ausbildung von Oberwellenschwingungsknoten kann auf diese Weise jedoch nicht ausgeschlossen werden mit der Folge, dass die Grundwellenschwingung negativ beeinflusst wird.

Die auftretenden Oberwellenschwingungen bewirken, dass sich die Schwingfrequenz beim Ein- bzw. Austauchen der Schwinggabel in Füllgut nicht kontinuierlich sondern sprunghaft unter Ausbildung einer Hysterese ändert. Bei viskosen Füllgütern kann es sogar zu einer Invertierung der Frequenzkennlinie kommen, da mit zunehmender Füllgutbedeckung der Einfluss von Oberwellenresonanzen wächst. Beim Eintauchen der Schwinggabel in Füllgut fällt zunächst - wie gewünscht - die Frequenz, bei zunehmender Bedeckung findet dann jedoch unter dem Einfluss der hochfrequenten Oberwellen ein Frequenzanstieg statt, der bei vollständig bedeckter Schwinggabel bis zu einem Frequenzwert führen kann, wie er einer unbedeckten Gabel entspricht. Wird das Grundwellenbandfilter tiefer abgestimmt, tritt das Problem auf, dass der Gabelresonator beim Einschalten der Stromversorgung nicht mehr selbstätig anschwingt.

Bei den bekannten Lösungen wird ein Rechtecksignal zur Ansteuerung der Piezoelemente verwendet. Da das Rechtecksignal neben der Grundwelle jedoch einen sehr starken Oberwellengehalt aufweist, werden im Gabelresonator vorhandene, jedoch unerwünschte Oberwellenresonanzen angeregt.

Die Verwendung eines oberwellenfreien Sinuserregersignals würde das Problem zwar theoretisch lösen, ist in der Praxis aber äußerst schaltungsaufwendig und energetisch sehr ungünstig. Neben dem Stromverbrauch des variabel frequenz- und phasensteuerbaren Sinusgenerators haben Sinusendstufen prinzipiell einen schlechten Wirkungsgrad und benötigen eine um √2 vergrößerte Versorgungsspannung, damit ein Sinusausgangssignal von gleicher Spannungszeitfläche wie ein Rechtecksignal erzeugt wird. Des weiteren ist derzeit kein Verfahren bekannt, das bei Sinuserregung die elektronische Trennung von Antriebs- und Detektionssignal gestattet.

Aufgabe des erfindungsgemäßen Verfahrens ist es daher, ein Verfahren zur Ansteuerung eines piezoelektrischen Antriebes in Füllstandmessgeräten anzugeben, welches bei minimalem Bauteile- und Energieaufwand sowie der Möglichkeit der gleichzeitigen Nutzung eines Piezoelements zum Schwingungserregen und -detektieren eine oberwellenarme Erregung des Gabelresonators ermöglicht.

Diese Aufgabe wird durch die Merkmale des Anspruches 1 gelöst. Weiterbildungen der Erfindung sind Gegenstand der Unteranspruche.

Das erfindungsgemäße Verfahren löst die Aufgabe also dadurch, dass ein trapezförmiges Signal als Erregersignal erzeugt wird. Das trapezförmige Signal wird dabei mittels einer Integratoreinrichtung aus einem Rechtecksignal erzeugt. Das Erregersignal kann z.B. aus zwei Phasen mit annähernd konstantem High- bzw. Low-Potential bestehen, welche von jeweils einer Phase von definierter Zeitdauer und definiert begrenzter Signaländerungsgeschwindigkeit unterbrochen sind. Hierzu wird vorzugsweise ein bis in die Begrenzung ausgesteuerter Rail-to-Rail-Integrator verwendet.

Das erfindungsgemässe Verfahren wird anhand eines Ausführungsbeispieles im Zusammenhang mit zwei Figuren erläutert. Es zeigen :
- Fig. 1: ein Blockschaltbild eines erfindungsgemässen Vibrations- Füllstand-Grenzschalters, und

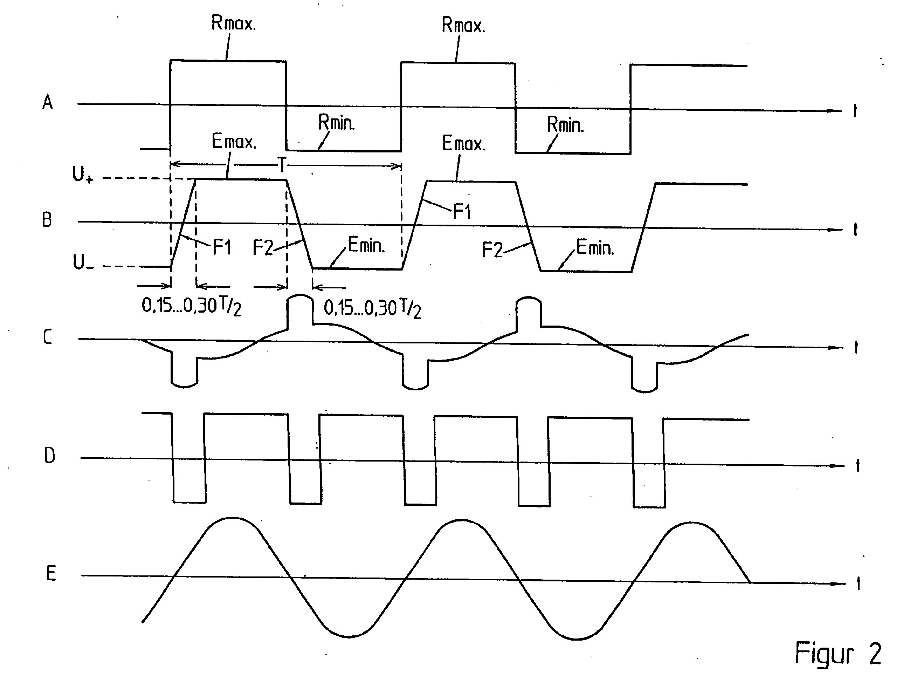

- Fig. 2: den zeitlichen Verlauf mehrerer Signale der in Fig. 1 dargestellten Schaltung.

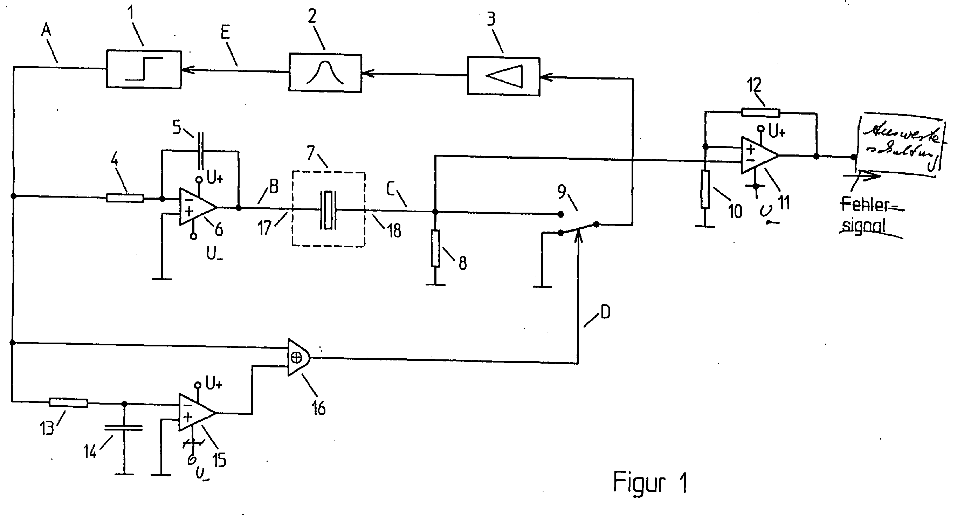

Im nachfolgenden Ausführungsbeispiel von Figur 1 ist als Erreger- und Detektionselement ein einziges Piezoelement gezeigt. Dieses kann jedoch durch einen ähnlich wirkenden Wandler (z.B. mehrere Piezoelemente, induktiver Wandler oder dgl.) ersetzt werden.

Das in Figur 1 beispielhaft dargestellte Blockschaltbild eines Vibrations-Füllstand-Grenzschalters weist eine Verstärkereinrichtung 1, 2, 3 auf, in deren Rückkopplungskreis eine Wandlereinrichtung 7, vorzugsweise eine Piezowandlereinrichtung geschaltet ist. Im Einzelnen besteht die Verstärkereinrichtung aus einem Verstärker 3 mit nachgeschaltetem Grundwellenbandfilter 2 und einem nachgeschalteten Nulldurchgangsdedektor 1 bzw. einer Rechteckformerstufe 1. An den Ausgang des Nulldurchgangsdetektors 1 ist der Eingang eine Integrators geschaltet. Dieser Integrator weist einen Operationsverstärker 6 auf. Der nicht invertierende Eingang dieses Operationsverstärkers 6 ist mit Bezugspotential verbunden. Der invertierende Eingang ist einerseits über einen Kondensator 5 mit dem Ausgang des Operationsverstärkers 6 in Verbindung und andererseits über einen Widerstand 4 an den Ausgang des Nulldurchgangdetektors 1 angeschlossen. Der Ausgang des Operationsverstärkers 6 des Integrators ist über eine Zuleitung 17 an einen Pol der Wandlereinrichtung 7 angeschlossen. Der andere Pol der Wandlereinrichtung 7 ist über eine Zuleitung 18 an eine Klemme eines Widerstandes 8 angeschlossen. Die andere Klemme des Widerstandes 8 liegt auf Bezugspotential. Der Verbindungspunkt zwischen Widerstand 8 und der Zuleitung 18 ist darüber hinaus an eine Eingangsklemme eines Umschalters 9 geschaltet. Eine weitere Eingangsklemme des Umschalters 9 liegt auf Bezugspotential. Die Ausgangsklemme des Umschalters 9 ist mit dem Eingang des Verstärkers 3 in Kontakt. Umgeschaltet wird der Umschalter 9 durch ein Steuersignal D, das am Ausgang eines EXOR-Gatters 16 abgegriffen wird. Ein erster Eingang dieses EXOR-Gatters ist mit dem Ausgang des Nulldurchgangdetektors 1 und zugleich mit der nicht an den Operationsverstärker 6 verbundenen, freien Klemme des Widerstandes 4 in Verbindung. Ein zweiter Eingang des EXOR-Gatters 16 ist an den Ausgang eines Komparators 15 geschaltet, dessen nichtinvertierender Eingang auf Bezugspotential liegt und dessen invertierender Eingang über einen Widerstand 13 ebenfalls mit dem Ausgang des Nulldurchgangsdedektors 1 verbunden ist. Zwischen Bezugspotential und invertierenden Eingang des Operationsverstärkers 15 bzw. Komparators 15 ist ein Kondensator 14 geschaltet.

Zusätzlich ist die Leitung 18 mit einem Hysterese behafteten Komparator 11 in Verbindung, indem die Leitung 18 mit dem invertierenden Eingang des Komparators 11 in Kontakt steht. Der nichtinvertierende Eingang dieses Komparators 11 ist einerseits über einen Widerstand 10 auf Bezugspotential gelegt und andererseits über einen weiteren Widerstand 12 mit dem Ausgang des Komparators 11 in Verbindung. Der Ausgang des Komparators 11 ist an eine Frequenzauswertestufe 20 geschaltet. Die Frequenzauswertestufe 20 erzeugt ein optisches und/oder akustisches Störmeldesignal, wenn in nachfolgender noch zu erläuternder Art und Weise festgestellt wird, dass die Wandlereinrichtung 7 nicht korrekt angeschlossen ist oder ein Leitungsdefekt in der Figur 1 dargestellten Schaltungsanordnung vorliegt.

Es ergibt sich folgender Funktionsablauf für die in Figur 1 gezeigte Schaltung.

Das vom Eingangsverstärker 3 verstärkte Schwingungsdetektionssignal wird dem Grundwellenbandfilter 2 zugeführt, welches das gefilterte und phasenkorrigierte, etwa sinusförmuige Zwischensignal E erzeugt. Dieses wird vom Nulldurchgangsdetektor 1 in ein Rechtecksignal A umgewandelt. Bei bekannten Sensoren würde dieses Signal A als Erregersignal für das Piezoelement 7 verwendet.

Das Signal A wird zur Reduktion seines Oberwellengehaltes einem Integrator 4, 5, 6 zugeführt, welcher das trapezartige Signal B generiert. Die Integrationszeitkonstante ist mittels der Bauteile 4, 5 derart gewählt, dass der Operationsverstärker 6 nach 15 bis 30 %, vorzugsweise ca. 25 %, der Halbperiodendauer T/2 des Signals A seinen maximalen bzw. minimalen Endwert Emax, Emin erreicht. Da der Operationsverstärker 6 vorzugsweise eine Rail-to-Rail-Ausgangsstufe aufweist, entsprechen diese Werte der positiven bzw. negativen Betriebsspannung U-, U. Das Signal B erreicht somit den vollen Betriebsspannungshub und hat durch den Integrationsvorgang eine mittels Widerstand 4 und Kondensator 5 definierte Flankensteilheit. Gegenüber dem Rechtecksignal A ist das trapezartige Signal B stark oberwellenreduziert, so daß im piezoelektrischen Schwingelement 7 ein nur geringer mechanischer Oberwellenanteil erregt wird.

Die Spannungszeitfläche des Signals B ist zwar gegenüber der des Rechtecksignals A etwas verringert, jedoch deutlich größer als bei einem Sinussignal. Bei gleicher Versorgungsspannung ermöglicht das Signal B im Vergleich zu einem Sinussignal eine vorteilhafterweise größere Erregerleistung.

Der Stromfluss durch das Piezoelement 7 wird am Messwiderstand 8 gemessen. Er setzt sich zusammen aus dem erregersignalbedingten Umladestrom des Piezoelementes 7 und den aufgrund der mechanischen Gabelresonatorschwingung erzeugten piezoelektrischen Ladungsquanten. Das Signal C zeigt die Überlagerung beider Stromkomponenten. Die Trennung von Schwingungsdetektionssignal und Betriebssignal erfolgt mittels Umschalter 9. Er tastet nach Maßgabe eines Steuersignals D die im Detektionssignal unerwünschten Umladeströme aus, indem er während der Zeit der Umladephase den Signaleingang des Eingangsverstärkers 3 auf Massepotential legt. Das hierzu benötigte Steuersignal D wird vom Signal A abgeleitet, indem mittels Widerstand 13, Kondensator 14 und Komparator 15 ein zu A phasenverschobenes, investiertes Hilfssignal erzeugt wird, welches durch Exlusivveroderung mit dem Signal A am EXOR-Gatter 16 das Signal D ergibt. Die Low-Phase des Steuersignals D definiert die Zeit der Signalaustastung und ist stets etwas länger gewählt als die steigende bzw. fallende Signalphase in Signal B.

Die Signale B und C werden mittels Leitungen 17, 18 zu dem Piezoelement 7 übertragen. Wird eine dieser Leitungen von der Elektronik abgetrennt, bricht die Oszillatorschwingung ab, was von der nachgeschalteten Auswerteelektronik als Fehlerzustand erkannt wird. Erfolgt die Unterbrechung jedoch piezoseitig, so schwingt jedoch ab einer gewissen Kabellänge der Leitungen 17, 18 der Oszillator weiter, da er durch die verbleibende Kabelkapazität weiterhin rückgekoppelt wird.

Die Schwingfrequenz ist von der verbleibenden Kabellänge sowie elektromagnetischen Einstreuungen abhängig und kann im Nennarbeitsbereich der Schwinggabel liegen, so dass der Defekt von der nachgeschalteten Frequenzauswerteelektronik gegebenenfalls nicht erkannt werden kann.

Zur Funktionsüberwachung der Piezoelementzuleitungen 17, 18 wird die Kapazität zwischen diesen während des Schwingvorganges simultan gemessen.

Die Piezokapazität beträgt typ. etwa 2 nF, die Kabelkapazität typ. max. etwa 0,5 nF. Eine Unterscheidung, ob das Piezoelement angeschlossen ist, ist daher anhand des Kapazitätswertes eindeutig möglich.

Zu diesem Zweck wird das die Piezoumladeströme beinhaltende, am Messwiderstand 8 angegriffene Signal C mittels hysteresebehaftetem Komparator 10, 11, 12 ausgewertet. Die Widerstände 10, 12 verleihen dem Komparator 11 eine symmetrisch zum Massepotential wirkende Schalthysterese. Während der ansteigenden bzw. abfallenden Signalphase von B treten am Messwiderstand 8 Spannungsamplituden auf, die proportional zur Signalanstiegsgeschwindigkeit von Signal B und der Summenkapazität von Piezoelement 7 und Leitung 17, 18 sind. Die Schalthysterese des Komparators 11 ist so groß gewählt, daß die Kapazität der Leitungen 17, 18 kein Umschalten des Komparators 11 bewirken kann, während bei angeschlossener Piezokapazität der Komparator 11 beim Flankenwechsel von Signal B jeweils in die umgekehrte Lage kippt. Es entsteht somit am Ausgang von Komparator 11 ein Signal, welches abgesehen von Laufzeitunterschieden dem Signal A entspricht und einer nicht näher dargestellten Fehlerauswerteeinheit zugeführt wird.

Die Frequenzauswertestufe wird mit ihrem Eingang nun nicht, wie es dem Stand der Technik entspräche, mit dem Signal A verbunden, sondern mit dem Ausgangssignal des Komparators 11. Eine Unterbrechung im Piezostromkreis führt somit dazu, dass in der Frequenzauswertestufe die Schwingungsausfallüberwachung anspricht.

Da die Komparatorschaltung 10, 11, 12 und der Messwiderstand 8 permanent vom normalen Meßsignal durchlaufen werden, ist ein unbemerkter Ausfall dieses Schaltungsteils nicht möglich. Die Eignung nach TÜV-Anforderungsklasse 3 ist somit gegeben.

Während bei Stromkreisüberwachungsverfahren mittels Parallelwiderständen oder rückgeführten Leitungen lediglich eine indirekte Überprüfung der Piezoelementenstromzuführung stattfindet, ermöglicht das beschriebene Verfahren durch Messung der Piezoelementkapazität eine direkte Kontrolle des Piezoelements auf physikalisches Vorhandensein im Stromkreis.

Figur 1 stellt ein praktisches Ausführungsbeispiel einer Anordnung dar, in welcher ein Piezoelement oberwellenarm elektrisch erregt wird, von selbigem Piezoelement anhand der piezoelektrisch erzeugten Ladungsquanten ein Detektionssignal für die mechanische Schwingung abgeleitet wird und von selbigem Piezoelement während des Schwingvorgangs die Eigenkapazität gemessen wird.

Die oberwellenarme Erregung des Piezoelementes läßt sich selbstverständlich auch ohne die im Ausführungsbeispiel beschriebene Leitungsbruchdetektion einsetzen. Es können darüber hinaus auch mehrere Piezoelemente anstelle eines einzigen Piezoelementes eingesetzt werden. Schließlich ist die oberwellenarme Erregung auch dort möglich, wo ein oder mehrere Piezoelemente ausschließlich zur Schwingungserregung eingesetzt werden.

## Patentansprüche

1. Verfahren zur Ansteuerung von piezoelektrischen Antrieben in Füllstandmessgeräten, bei welchen eine Piezoeinrichtung (7) mit einem Gabelresonator gekoppelt ist und diese Piezoeinrichtung (7) einerseits zur Schwingungserregung mit einem Erregersignal (B) beaufschlagt wird und andererseits diese Piezoeinrichtung (7) zur Schwingungsdetektion eingesetzt wird,
**dadurch gekennzeichnet, dass** das Erregersignal (B) ein Signal mit trapezförmigem Verlauf ist, wobei der trapezförmige Verlauf des Erregersignals (B) mittels einer Integratoreinrichtung (4, 5, 6) aus einem Rechtecksignal (A) erzeugt wird.

2. Verfahren nach Anspruch 1,
**dadurch gekennzeichnet, dass** die Maximalpegel (Emax) und Minimalpegel (Emin) des trapezförmigen Erregersignals (B) den maximalen und minimalen Pegeln (U₊, U-) einer den piezoelektrischen Antrieb versorgenden Betriebsspannung entsprechen.

3. Verfahren nach Anspruch 1 oder 2,
**dadurch gekennzeichnet, dass** die abfallenden und ansteigenden Flanken (F1, F2) des trapezförmigen Erregersignals (B) betragsmäßig eine mindestens annähernd gleiche Steigung aufweisen.

4. Verfahren nach einem der Ansprüche 1 bis 3,
**dadurch gekennzeichnet, dass** die abfallenden und ansteigenden Flanken (F1, F2) etwa 0,15 bis 0,30, vorzugsweise etwa 0,25, einer Halbperiodendauer (T/2) des trapezförmigen Erregersignals (B) entsprechen.

5. Verfahren nach einem der Ansprüche 1 bis 4,
**dadurch gekennzeichnet, dass** die Integratoreinrichtung (4, 5, 6) ein Rail-to-Rail-Integrator ist.

6. Verfahren nach Anspruch 5
**dadurch gekennzeichnet, dass** das Rechtecksignal (A) mindestens annähernd gleichlange Maximalpegel und Minimalpegel (Rmax, Rmin) aufweist.

7. Verfahren nach einem der Ansprüche 1 bis 6,
**dadurch gekennzeichnet, dass** das trapezfärmige Erregersignal (B) und/oder das Rechtecksignal (A) symmetrisch ist.

8. Verfahren nach einem der Ansprüche 1 bis 7,
**dadurch gekennzeichnet, dass** das trapezförmige Erregersignal (B) einem einzigen Piezoelement der Piezoeinrichtung (7) zugeführt wird und dieses Piezoelement sowohl zur Schwingungserregung als auch Schwingungsdetektion eingesetzt wird.

## Claims

1. Method for controlling piezoelectric drives in filling level measuring devices, in which a piezo device (7) is coupled to a fork resonator and on the one hand an excitation signal (B) is applied to this piezo device (7) in order to excite vibrations and on the other hand this piezo device (7) is used to detect vibrations, **characterised in that** the excitation signal (B) is a signal with a trapezoidal profile, wherein the trapezoidal profile of the excitation signal (B) is generated by means of an integrator device (4, 5, 6) from a square-wave signal (A).

2. Method according to claim 1, **characterised in that** the maximum level (Emax) and minimum level (Emin) of the trapezoidal excitation signal (B) correspond to the maximum and minimum levels (U₊, U₋) of an operating voltage supplying the piezoelectric drive.

3. Method according to claim 1 or 2, **characterised in that** the falling and rising edges (F1, F2) of the trapezoidal excitation signal (B) have an at least approximately equal gradient.

4. Method according to one of claims 1 to 3, **characterised in that** the falling and rising edges (F1, F2) correspond to approximately 0.15 to 0.30, preferably approximately 0.25, of a half-period (T/2) of the trapezoidal excitation signal (B).

5. Method according to one of claims 1 to 4, **characterised in that** the integrator device (4, 5, 6) is a rail-to-rail integrator.

6. Method according to claim 5, **characterised in that** the square-wave signal (A) has maximum and minimum levels (Rmax, Rmin) of at least approximately equal length.

7. Method according to one of claims 1 to 6, **characterised in that** the trapezoidal excitation signal (B) and/or the square-wave signal (A) is/are symmetrical.

8. Method according to one of claims 1 to 7, **characterised in that** the trapezoidal excitation signal (B) is fed to a single piezo element of the piezo device (7) and this piezo element is used both to excite vibrations and to detect vibrations.

## Revendications

1. Procédé de commande d'un entraînement piézo-électrique d'appareil de mesure de niveau de remplissage,
procédé selon lequel une installation piézo-électrique (7) est couplée à un résonateur à fourche et d'une part cette installation piézo-électrique (7) reçoit un signal d'excitation (B) pour l'excitation des oscillations et d'autre part, l'installation piézoélectrique (7) est utilisée pour détecter les oscillations,
procédé **caractérisé en ce que**
- le signal d'excitation (B) est un signal de forme trapézoïdale, et
- la forme trapézoïdale du signal d'excitation (B) est fournie par une installation d'intégration (4, 5, 6) à partir d'un signal rectangulaire (A).

2. Procédé selon la revendication 1,
**caractérisé en ce que**
le niveau maximum (Emax) et le minimum (Emin) du signal d'excitation (B) de forme trapézoïdale, correspondent au niveau maximum (U₊) et niveau minimum (U₋) d'une tension d'alimentation de l'entraînement piézo-électrique.

3. Procédé selon la revendication 1 ou 2,
**caractérisé en ce que**
les flancs descendants et montants (F1, F2) du signal d'excitation (B) de forme trapézoïdale, ont une pente dont l'amplitude est au moins sensiblement identique.

4. Procédé selon l'une des revendications 1 à 3,
**caractérisé en ce que**
les flancs descendants et montants (F1, F2) correspondent sensiblement à 0,15-0,30, et de préférence à environ 0,25, d'une demi-période (T/2) du signal d'excitation (B) de forme trapézoïdale.

5. Procédé selon l'une des revendications 1 à 4,
**caractérisé en ce que** l'installation d'intégration (4, 5, 6) est un intégrateur "rail à rail".

6. Procédé selon la revendication 5,
**caractérisé en ce que**
le signal rectangulaire (A) a au moins sensiblement un niveau maximum et un niveau minimum de même longueur (Rmax, Rmin).

7. Procédé selon l'une des revendications 1 à 6,
**caractérisé en ce que**
le signal d'excitation de forme trapézoïdale (B) et/ou le signal rectangulaire (A), sont symétriques.

8. Procédé selon l'une des revendications 1 à 7,
**caractérisé en ce que**
le signal d'excitation trapézoïdal (B) est fourni à unique élément piézo-électrique de l'installation piézo-électrique (7) et cet élément piézo-électrique est utilisé à la fois pour exciter l'oscillation et pour détecter l'oscillation.
